(19) Europäisches Patentamt
European Patent Office
Office européen des brevets

(11) **EP 1 481 387 B1**

(12) **FASCICULE DE BREVET EUROPEEN**

(45) Date de publication et mention
de la délivrance du brevet:
**01.11.2017 Bulletin 2017/44**

(21) Numéro de dépôt: **03727575.7**

(22) Date de dépôt: **07.03.2003**

(51) Int Cl.:
*G09G 3/34* *(2006.01)*

(86) Numéro de dépôt international:
**PCT/FR2003/000734**

(87) Numéro de publication internationale:
**WO 2003/075251 (12.09.2003 Gazette 2003/37)**

(54) **PROCEDE D'AFFICHAGE PAR SOUS-TRAMES D'UNE IMAGE VIDEO AVEC GRADATIONS SUR UN DISPOSITIF D'AFFICHAGE NUMERIQUE AVEC REDUCTION DES ARTEFACTS**

TEILFELDVERFAHREN ZUR ANZEIGE EINES VIDEOBILDES MIT HELLIGKEITSABSTUFUNG AUF EINEM DIGITALEN ANZEIGEGERÄT MIT ARTEFAKTREDUKTION

METHOD FOR DISPLAYING A VIDEO IMAGE ON A DIGITAL DISPLAY DEVICE

(84) Etats contractants désignés:
**DE FR GB IT**

(30) Priorité: **07.03.2002 FR 0203141**

(43) Date de publication de la demande:
**01.12.2004 Bulletin 2004/49**

(73) Titulaire: **Thomson Licensing**
**92130 Issy-les-Moulineaux (FR)**

(72) Inventeurs:
• **DOYEN, Didier**
**F-35340 LA BOUEXIERE (FR)**
• **BOREL, Thierry**
**F-35530 NOYAL SUR VILAINE (FR)**
• **KERVEC, Jonathan**
**F-35380 PAIMPONT (FR)**

(74) Mandataire: **Huchet, Anne et al**
**TECHNICOLOR**
**1-5, rue Jeanne d'Arc**
**92130 Issy-les-Moulineaux (FR)**

(56) Documents cités:
EP-A- 0 875 881          EP-A- 1 052 614
EP-A- 1 180 714          WO-A2-02/45062
US-A- 5 619 228          US-A1- 2001 015 628
US-A1- 2002 008 706      US-B1- 6 275 271

• **PATENT ABSTRACTS OF JAPAN vol. 2000, no. 02, 29 février 2000 (2000-02-29) -& JP 11 327492 A (MITSUBISHI ELECTRIC CORP), 26 novembre 1999 (1999-11-26) -& US 6 392 656 B1 (SOMEYA ET AL.) 21 mai 2002 (2002-05-21)**

## Description

La présente invention concerne un procédé d'affichage d'une image vidéo sur un dispositif d'affichage numérique. L'invention s'applique tout particulièrement à des appareils de projection et de rétro-projection, des téléviseurs ou des moniteurs.

Parmi les dispositifs d'affichage, les dispositifs d'affichage numérique sont des dispositifs comportant une ou plusieurs cellules qui peuvent prendre un nombre fini de valeurs d'éclairement. Actuellement, ce nombre fini de valeurs est égal à deux et correspond à un état allumé et un état éteint de la cellule. Pour obtenir un plus grand nombre de niveaux de gris, il est connu de moduler dans le temps l'état des cellules sur la trame vidéo pour que l'oeil humain, en intégrant les impulsions de lumière résultant de ces changements d'état, détecte des niveaux de gris intermédiaires.

Parmi les dispositifs d'affichage numérique connus, il existe ceux comportant une matrice numérique de micro-miroirs ou matrice DMD (de l'anglais : Digital Micromirror Device). Une matrice DMD est un composant, classiquement utilisé pour la vidéo-projection, qui est formé d'une puce sur laquelle sont montés plusieurs milliers de miroirs microscopiques ou micro-miroirs qui, commandés à partir de données numériques, servent à projeter une image sur un écran, en pivotant sur eux-mêmes de manière à réfléchir ou à bloquer la lumière provenant d'une source externe. La technologie reposant sur l'utilisation de telles matrices de micro-miroirs et consistant en un traitement numérique de la lumière est connue en anglais sous le nom de "Digital Light Processing" ou DLP. Dans la technologie DLP, il est prévu un micro-miroir par pixel d'image à afficher. Le micro-miroir présente deux positions de fonctionnement, à savoir une position active et une position passive, de part et d'autre d'une position de repos. En position active, le micro-miroir est incliné de quelques degrés (environ 10 degrés) par rapport à sa position de repos de sorte que la lumière provenant de la source externe est projetée sur l'écran à travers une lentille de projection. En position passive, le micro-miroir est incliné de quelques degrés dans la direction opposée de sorte que la lumière provenant de la source externe est dirigée vers un absorbeur de lumière. Les périodes d'éclairement d'un pixel correspondent donc aux périodes pendant lesquelles le micro-miroir associé est en position active.

Ainsi, si la lumière fournie à la matrice de micro-miroirs est une lumière blanche, les pixels correspondant aux micro-miroirs en position active sont blancs et ceux correspondant aux micro-miroirs en position passive sont noirs. Les niveaux de gris intermédiaires sont obtenus par une modulation temporelle de la lumière projetée sur l'écran correspondant à une modulation PWM (de l'anglais : Pulse Width Modulation). En effet, chaque micro-miroir est capable de changer de position plusieurs milliers de fois par seconde. L'oeil humain ne détecte pas ces changements de position, ni les impulsions de lumière qui en résultent, mais intègre les impulsions entre elles et perçoit donc le niveau de lumière moyen. Le niveau de gris détecté par l'oeil humain est donc directement proportionnel au temps pendant lequel le micro-miroir est en position active au cours d'une trame vidéo.

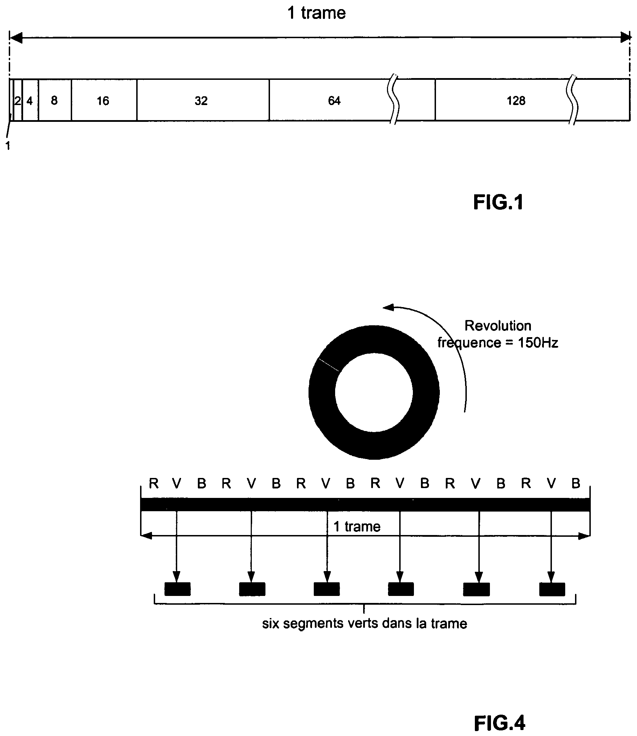

Pour obtenir 256 niveaux de gris, la trame vidéo est par exemple divisée en 8 sous-périodes consécutives de poids différents. Ces sous-périodes sont couramment appelées sous-balayages. Pendant chaque sous-balayage, les micro-miroirs sont soit dans une position active, soit dans une position passive. Le poids de chaque sous-balayage est proportionnel à sa durée. La figure 1 montre un exemple de répartition des sous-balayages dans une trame vidéo. La durée de la trame vidéo est de 16,6 ou 20 ms suivant le pays. La trame vidéo donnée en exemple comprend huit sous-balayages de poids respectifs 1, 2, 4, 8, 16, 32, 64 et 128. Les périodes d'éclairement d'un pixel correspondent aux sous-balayages pendant lesquels le micro-miroir associé est dans une position active. L'oeil humain intègre temporellement les périodes d'éclairement du pixel et détecte un niveau de gris proportionnel à la durée globale des périodes d'éclairement au cours de la trame vidéo.

Il existe quelques problèmes liés à l'intégration temporelle des périodes d'éclairement. Un problème de faux contours apparaît notamment lorsqu'un objet se déplace entre deux images consécutives. Ce problème se manifeste par l'apparition de bandes plus sombres ou plus claires sur des transitions de niveau de gris peu perceptibles normalement. Pour les appareils couleur, ces bandes peuvent être colorées.

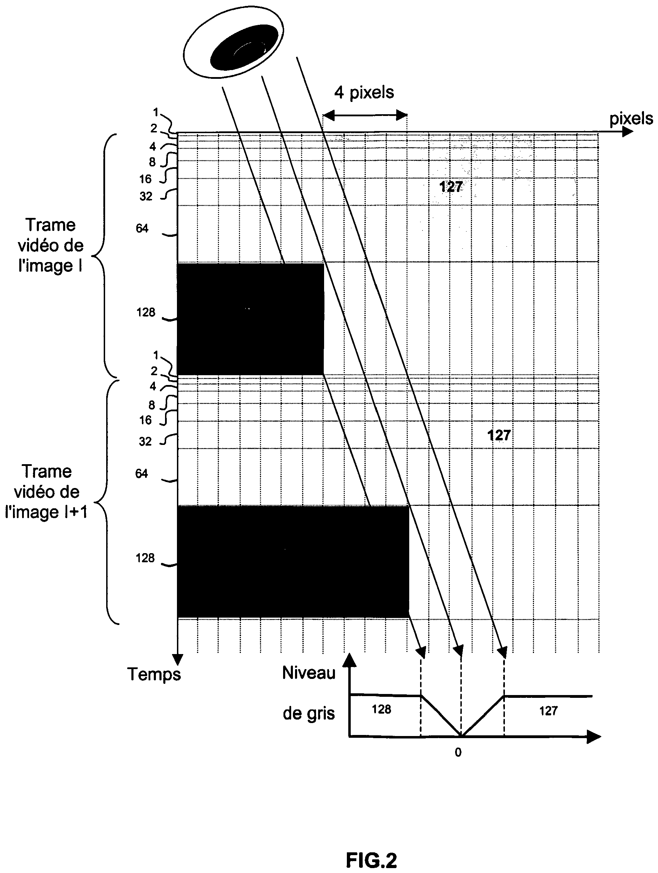

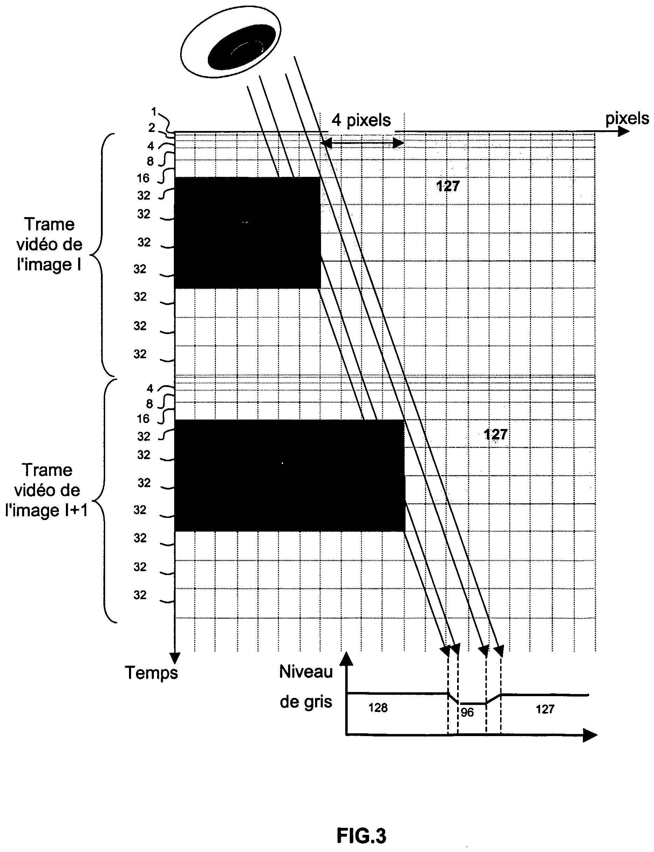

Ce problème de faux contours est illustré par la figure 2 représentant les sous-balayages pour deux images consécutives, I et I+1, comportant une transition entre un niveau de gris 127 et un niveau de gris 128. Cette transition se déplace de 4 pixels entre l'image I et l'image I+1. Dans cette figure, l'axe des ordonnées représente l'axe du temps et l'axe des abscisses représente les pixels des différentes images. L'intégration faite par l'oeil revient à intégrer temporellement selon les droites obliques représentées dans la figure car l'oeil a tendance à suivre l'objet en mouvement. Il intègre donc des informations provenant de pixels différents. Le résultat de l'intégration se traduit par l'apparition d'un niveau de gris égal à zéro au moment de la transition entre les niveaux de gris 127 et 128. Ce passage par le niveau de gris zéro fait apparaître une bande sombre au niveau de la transition. Dans le cas inverse, si la transition passe du niveau 128 au niveau 127, un niveau 255 correspondant à une bande claire apparaît au moment de la transition. Une solution connue à ce problème consiste à "casser" les sous-balayages de poids forts pour diminuer l'erreur d'intégration. La figure 3 représente la même transition que la figure 2 mais avec sept sous-balayages de poids 32 à la place des trois sous-balayages de poids 32, 64 et 128. L'erreur d'intégration est alors au maximum d'une valeur de niveau de gris égale à 32.

Il est également possible de répartir les niveaux de gris différemment mais il subsiste toujours une erreur d'intégration.

Par ailleurs, comme dans tous les appareils vidéo, l'affichage d'une image couleur requiert l'affichage de trois images (rouge, verte et bleue). Dans les projecteurs à matrice DMD unique, ces trois images sont affichées séquentiellement. De tels projecteurs comprennent par conséquent une roue tournante comportant des filtres rouges, verts et bleus à travers lesquelles la lumière blanche provenant de la source du projecteur est filtrée avant d'être transmise à la matrice DMD. On fournit ainsi séquentiellement de la lumière rouge, verte et bleue à la matrice DMD pendant la trame vidéo. La roue tournante comporte généralement six filtres (2 rouges, 2 verts, 2 bleus) et tourne à une fréquence de 150 ou 180 tours/seconde, soit 3 révolutions par trame vidéo. Les données numériques des composantes R, V et B de l'image vidéo sont fournies à la matrice DMD de manière synchronisée avec la lumière rouge, verte et bleue afin que les composantes R, V et B de l'image soient affichées avec la lumière appropriée. La trame vidéo peut donc être découpée en 18 segments temporels, 6 pour chaque couleur, comme illustrée à la figure 4. Dans le cas d'une trame vidéo de 20 ms, la durée de chaque segment est de 1,1 ms environ. Les sous-balayages montrés à la figure 1 sont répartis, pour chaque couleur, sur les 6 segments temporels de chaque couleur. Le sous-balayage de poids fort est par exemple découpé en six périodes élémentaires rattachées chacune à un segment temporel différent alors que le sous-balayage de poids faible n'est présent que dans l'un des 6 segments.

Ce type de projecteur présente un défaut de séparation des couleurs, également connu sous le nom de "color break-up" dans la terminologie anglo-saxonne, en raison de l'affichage séquentiel des couleurs. Ce défaut est visible chaque fois que l'oeil suit un objet mobile se déplaçant rapidement dans l'image. Les zones claires d'image présentant un fort contraste semblent alors se décomposer momentanément en des bandes rouge, verte et bleue le long de la direction du mouvement. Etant donné que les composantes R, V, B de l'image sont affichées séquentiellement et que l'oeil bouge en suivant le mouvement, les couleurs sont donc reproduites sur des emplacements différents de la rétine de l'oeil. Cela empêche donc le cerveau de les intégrer ensemble en une image couleur. De même, des mouvements soudains de l'oeil sur une image fixe peuvent également interrompre l'intégration des impulsions de lumière dans le cerveau et perturber la perception du niveau de gris réel.

EP 1052614 A publié le 15 novembre 2000 décrit des dispositifs d'affichage possédant une luminosité d'écran significative consommant peu d'énergie électrique.

US5619228 A publié le 8 avril 1997 décrit des systèmes d'affichage utilisant des modulateurs de lumière spatiaux.

EP 0875881 A publié le 4 novembre 1998 décrit des modulateurs de lumière à matrice active pour lesquels des niveaux de gris reproductibles peuvent être obtenus.

US 6275271 B1 publié le 14 août 2001 décrit une méthode d'affichage de ton qui permet le chevauchement et l'affichage de plusieurs sous-balayages obtenus en pondérant des images dynamiques ayant des tons dans le domaine temporel dans un dispositif d'affichage DLP.

US 2001/015628 A1 publié le 23 août 2001 décrit un dispositif d'affichage plasma avec lequel un affichage à luminosité élevée est obtenu tout en ayant une consommation d'énergie réduite.

WO 02/45062 A2 publié le 6 juin 2002 décrit une méthode et un dispositif de contrôle de dispositif d'affichage basé sur le principe de la modulation à largeur d'impulsion.

US 2002/008706 A1 publié le 24 janvier 2002 décrit une méthode d'affichage d'une image sur un dispositif d'affichage en une pluralité de sous-balayages.

Un but de l'invention est de proposer un procédé d'affichage d'une image vidéo sur un dispositif d'affichage numérique permettant de réduire, voire éliminer, ces problèmes d'effets de faux contours.

Un autre but de l'invention est de proposer un procédé d'affichage permettant de limiter ces problèmes de séparation des couleurs lorsque les couleurs sont affichées séquentiellement dans le dispositif d'affichage numérique.

Aussi, selon l'invention, on prévoit d'appliquer un codage particulier aux données numériques fournies à la matrice DMD pour atténuer ou supprimer toutes les perturbations liées à l'intégration temporelle et à l'affichage séquentiel des composantes R, V, B de l'image vidéo.

L'invention est un procédé d'affichage d'une image vidéo sur un dispositif d'affichage numérique pendant une trame vidéo selon la revendication 1 comprenant au moins deux segments temporels distincts pour afficher un niveau de gris, ledit dispositif d'affichage numérique comportant une pluralité de cellules, chaque cellule pouvant prendre sélectivement un état allumé ou un état éteint, chaque cellule pouvant en outre changer plusieurs fois d'état pendant une trame vidéo. Chaque cellule change d'état au plus une fois pendant chaque segment temporel de la trame vidéo.

Lorsque l'affichage d'une image vidéo est réalisé par l'affichage séquentiel de trois images de couleur rouge, verte et bleue, respectivement dans le dispositif d'affichage numérique, la trame vidéo comporte au moins deux segments temporels non consécutifs pour chaque couleur.

Chaque segment temporel comporte de préférence une pluralité de sous-balayages consécutifs de durées différentes pendant chacun desquels chaque cellule est soit dans un état allumé, soit dans un état éteint.

Cet affichage permet notamment de ne pas introduire de "trous temporels" dans le segment, lesquels trous temporels sont généralement générateurs de perturbations lors de l'intégration temporelle.

De préférence, pour chaque couleur, la durée des sous-balayages desdits au moins deux segments temporels est déterminée de façon à ce que la durée de l'état allumé des cellules croisse selon une courbe de correction inverse de gamma.

L'invention est également un dispositif d'affichage numérique d'une image vidéo pendant une trame vidéo selon la revendication 5 comprenant au moins deux segments temporels distincts pour afficher un niveau de gris, ledit dispositif d'affichage numérique comportant une pluralité de cellules, chaque cellule pouvant prendre sélectivement un état allumé ou un état éteint, chaque cellule pouvant en outre changer plusieurs fois d'état pendant une trame vidéo. Ledit dispositif comporte des moyens pour changer l'état des cellules au plus une fois pendant chaque segment temporel de la trame vidéo.

Selon un mode de réalisation, le dispositif d'affichage numérique comprend une matrice numérique de micro-miroirs. Chaque cellule du dispositif d'affichage numérique est associée à un micro-miroir. Une cellule du dispositif est dans un état allumé lorsque le micro-miroir associé est dans une position active dans laquelle il contribue à la projection de lumière sur un écran du dispositif et dans un état éteint lorsque le micro-miroir associé est dans une position passive dans laquelle il empêche ladite projection de lumière sur ledit écran.

D'autres caractéristiques et avantages de l'invention apparaîtront à la lecture de la description détaillée qui suit et qui est faite en référence aux dessins annexés, parmi lesquels :

- la figure 1 représente un exemple de répartition des sous-balayages dans une trame vidéo pour un appareil à modulation de durée d'impulsion;
- la figure 2 illustre le phénomène d'effets de faux contours présent lorsqu'une transition se déplace entre deux images consécutives ;
- la figure 3 illustre une solution connue pour restreindre le phénomène d'effets de faux contours ;
- la figure 4 représente une trame vidéo classique pour l'affichage d'image couleur dans des appareils ayant une unique matrice numérique de micro-miroirs ;
- la figure 5 représente un graphique représentant le temps d'éclairement pour chaque niveau de gris dans un exemple de réalisation du procédé de l'invention ;
- la figure 6 représente la répartition des sous-balayages dans le premier segment de chaque couleur pour ledit exemple de réalisation du procédé de l'invention ; et
- la figure 7 représente un exemple de dispositif mettant en oeuvre le procédé de l'invention.

Selon l'invention, on prévoit d'utiliser un codage dit incrémental des niveaux de gris sur chacun des segments de la trame vidéo.

Ce codage incrémental est conçu pour ne pas créer de perturbations liées à l'intégration temporelle par l'oeil humain lors de l'affichage d'une image vidéo. Selon ce codage qui est appliqué aux données numériques fournies à la matrice DMD, les micro-miroirs de la matrice DMD changent au plus une fois de position pendant chaque segment de la trame vidéo. Ainsi, si un micro-miroir est dans une position active au début d'un segment et passe dans une position passive au cours de ce segment, il reste dans cette position jusqu'à la fin du segment.

De manière plus générale, cela revient à dire que, selon l'invention, les cellules du dispositif d'affichage numérique changent au plus une fois d'état (allumé ou éteint) pendant chaque segment de la trame vidéo. Chaque segment de la trame vidéo comporte une pluralité de sous-balayages de poids différents. Comme indiqué dans le préambule, les micro-miroirs ne changent pas de position pendant les sous-balayages. Aussi, si un micro-miroir de la matrice DMD est dans une position active au début du segment et passe dans une position passive au début d'un sous-balayage de ce segment, il reste dans cette position pendant les sous-balayages restants du segment.

Ce codage ne permet d'afficher qu'un nombre restreint de niveaux de gris possibles. Pour un segment comportant N sous-balayages, il permet d'afficher au plus N+1 valeurs de niveau de gris. Cependant, des techniques de diffusion d'erreur ou de bruitage appelé communément "dithering" en langue anglaise, bien connues de l'homme du métier, permettent de compenser ce faible nombre de niveaux de gris. Le principe de la technique de "dithering" consiste à décomposer le niveau de gris recherché en une combinaison de niveaux de gris affichables qui, par intégration temporelle (ces niveaux de gris sont affichés sur plusieurs images successives) ou par intégration spatiale (ces niveaux de gris sont affichés dans une zone de l'image englobant le pixel considéré), restituent à l'écran un niveau de gris proche du niveau de gris recherché.

Le principal avantage de ce codage est qu'il ne crée pas de "trous temporels" dans le segment, lesdits trous étant générateurs de perturbations lors de l'intégration temporelle. Un trou temporel désigne un sous-balayage "allumé" (sous-balayage pendant lequel le pixel présente un niveau de gris non nul) entre deux sous-balayages éteints (sous-balayages pendant lesquels le pixel présente un niveau de gris nul) ou inversement.

Pour illustrer le procédé de l'invention, nous considérerons une trame vidéo ayant une durée de 20 ms (fréquence = 50 Hz) et comportant 6 segments temporels par couleur, soit 18 segments temporels. Chaque segment temporel présente une durée de 1,1 ms environ. Etant donné que l'adressage de la totalité des micro-miroirs de la matrice DMD prend environ 95μs dans la technologie DLP actuelle, il est possible d'adresser la matrice DMD au moins 60 fois par trame pour chaque couleur, soit 10 fois par segment. Nous allons donc utiliser un codage incrémental comportant 61 niveaux de gris (le niveau de gris zéro + 60 niveaux de gris non nuls).

Le tableau 1, représenté ci-après, associe, à chacune des 61 valeurs de niveau de gris, une valeur de temps d'éclairement pendant une trame vidéo. La première colonne du tableau 1 correspond aux indices des niveaux de gris, la seconde correspond au temps d'éclairement (en microsecondes) nécessaire pour obtenir ces niveaux de gris pendant une trame vidéo et la troisième représente la différence de temps d'éclairement (en microsecondes) entre le niveau de gris considéré et celui qui le précède.

**Tableau 1**

| Indice | Temps | Différence | Indice | Temps | Différence |
|--------|---------|------------|--------|---------|------------|
| NG0 | 0.00 | 0 | NG31 | 1609.24 | 101.49 |
| NG1 | 12.00 | 12.00 | NG32 | 1714.06 | 104.82 |
| NG2 | 16.99 | 4.99 | NG33 | 1822.21 | 108.15 |
| NG3 | 25.31 | 8.32 | NG34 | 1933.68 | 111.47 |
| NG4 | 36.96 | 11.65 | NG35 | 2048.49 | 114.80 |
| NG5 | 51.93 | 14.97 | NG36 | 2166.62 | 118.13 |
| NG6 | 70.23 | 18.30 | NG37 | 2288.07 | 121.46 |
| NG7 | 91.86 | 21.63 | NG38 | 2412.86 | 124.78 |
| NG8 | 116.82 | 24.96 | NG39 | 2540.97 | 128.11 |
| NG9 | 145.10 | 28.28 | NG40 | 2672.41 | 131.44 |
| NG10 | 176.72 | 31.61 | NG41 | 2807.18 | 134.77 |
| NG11 | 211.66 | 34.94 | NG42 | 2945.27 | 138.10 |
| NG12 | 249.92 | 38.27 | NG43 | 3086.69 | 141.42 |
| NG13 | 291.52 | 41.59 | NG44 | 3231.44 | 144.75 |
| NG14 | 336.44 | 44.92 | NG45 | 3379.52 | 148.08 |
| NG15 | 384.69 | 48.25 | NG46 | 3530.93 | 151.41 |
| NG16 | 436.27 | 51.58 | NG47 | 3685.66 | 154.73 |
| NG17 | 491.17 | 54.91 | NG48 | 3843.72 | 158.06 |
| NG18 | 549.41 | 58.23 | NG49 | 4005.11 | 161.39 |
| NG19 | 610.97 | 61.56 | NG50 | 4169.82 | 164.72 |
| NG20 | 675.85 | 64.89 | NG51 | 4337.87 | 168.04 |
| NG21 | 744.07 | 68.22 | NG52 | 4509.24 | 171.37 |
| NG22 | 815.61 | 71.54 | NG53 | 4683.94 | 174.70 |
| NG23 | 890.48 | 74.87 | NG54 | 4861.96 | 178.03 |
| NG24 | 968.68 | 78.20 | NG55 | 5043.32 | 181.35 |
| NG25 | 1050.21 | 81.53 | NG56 | 5228.00 | 184.68 |
| NG26 | 1135.06 | 84.85 | NG57 | 5416.01 | 188.01 |
| NG27 | 1223.24 | 88.18 | NG58 | 5607.34 | 191.34 |
| NG28 | 1314.75 | 91.51 | NG59 | 5802.01 | 194.66 |
| NG29 | 1409.59 | 94.84 | NG60 | 6000.00 | 197.99 |

(suite)

| Indice | Temps | Différence | Indice | Temps | Différence |
|--------|---------|------------|--------|-------|------------|
| NG30   | 1507.75 | 98.16      |        |       |            |

Dans le tableau 1, les valeurs de temps d'éclairement ont été avantageusement choisies pour suivre une courbe de correction inverse de gamma. Dans le présent document, la correction inverse de gamma correspond à la suppression de la correction gamma qui est existante sur certaines sources d'images qui sont destinées à être visualisées sur des tubes. En effet, contrairement aux tubes cathodiques, le rapport entre les niveaux de gris à l'entrée (image d'origine) et les niveaux de gris à la sortie (à l'écran) dans les matrices DMD est linéaire. Or, étant donné qu'une correction de gamma est réalisée sur l'image source au niveau de la caméra, une correction inverse de gamma doit être appliquée sur l'image provenant de la caméra pour obtenir une image correcte à l'écran. Selon l'invention, cette correction inverse de gamma est donc effectuée au cours du codage des données numériques fournies à la matrice DMD.

La courbe de correction inverse de gamma employée dans le tableau 1 est donnée par la formule suivante :

$$\begin{cases} a\left(\dfrac{x}{60}\right)^2 + b = y \\ \text{où } a \text{ et } b \text{ sont des constantes} \\ \quad x \text{ est un indice de niveau de gris compris entre 0 et 60} \\ \quad y \text{ est une période de temps} \end{cases}$$

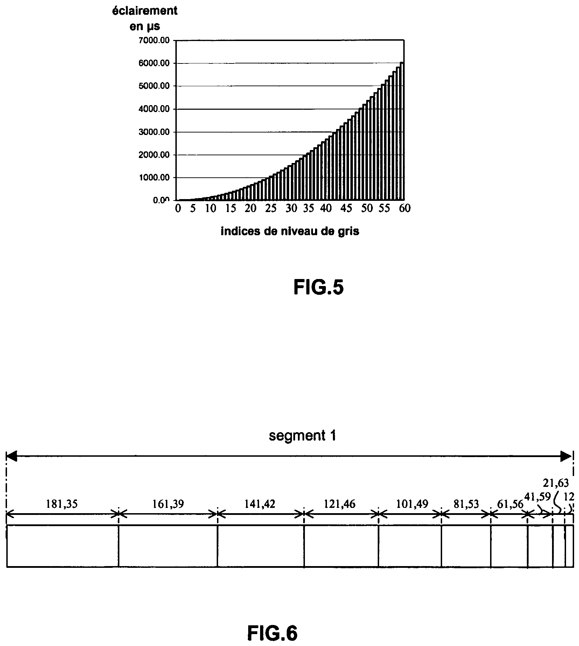

Par souci de simplification, nous avons considéré dans ce tableau que la durée globale des 6 segments temporels d'une même couleur est de 6 ms au lieu de 6,66 ms. Ce tableau est également représenté sous la forme d'un graphique à la figure 5. Ce graphique montre de manière immédiate que les temps d'éclairement définis dans cette table suivent effectivement une courbe de correction inverse de gamma.

Le temps d'éclairement de chaque niveau de gris est réparti, pour chaque couleur, sur les 6 segments temporels. Selon l'invention, ce temps d'éclairement est reproduit par au plus une impulsion de lumière de durée variable dans chaque segment temporel puisque les micro-miroirs changent au plus une fois de position au cours de chaque segment temporel.

La différence de temps d'éclairement entre deux niveaux de gris successifs est associée à un des six segments temporels de la trame vidéo. Ainsi, pour un niveau de gris donné, le temps d'éclairement additionnel correspondant à la différence de temps d'éclairement entre ce niveau de gris et le niveau de gris qui lui est immédiatement inférieur, est opéré sur un segment unique de la trame vidéo. Le tableau 2 illustre la position des temps d'éclairement additionnels de chaque niveau de gris. Il indique plus exactement, pour chaque niveau de gris repéré par son indice, le segment dans lequel le temps d'éclairement additionnel est réalisé.

**Tableau 2**

| Segment1 | Segment2 | Segment3 | Segment4 | Segment5 | Segment6 |
|----------|----------|----------|----------|----------|----------|
| NG0      | NG0      | NG0      | NG0      | NG0      | NG0      |
| NG1      | NG2      | NG3      | NG4      | NG5      | NG6      |
| NG7      | NG8      | NG9      | NG10     | NG11     | NG12     |
| NG13     | NG14     | NG15     | NG16     | NG17     | NG18     |
| NG19     | NG20     | NG21     | NG22     | NG23     | NG24     |
| NG25     | NG26     | NG27     | NG28     | NG29     | NG30     |
| NG31     | NG32     | NG33     | NG34     | NG35     | NG36     |
| NG37     | NG38     | NG39     | NG40     | NG41     | NG42     |
| NG43     | NG44     | NG45     | NG46     | NG47     | NG48     |
| NG49     | NG50     | NG51     | NG52     | NG53     | NG54     |

(suite)

| Segment1 | Segment2 | Segment3 | Segment4 | Segment5 | Segment6 |
|---|---|---|---|---|---|
| NG55 | NG56 | NG57 | NG58 | NG59 | NG60 |

Le tableau 2 montre, par exemple, que le niveau de gris NG28 est obtenu en augmentant, par rapport au niveau de gris NG27, le temps d'éclairement du quatrième segment de la trame vidéo.

Le temps d'éclairement additionnel de chaque niveau de gris par rapport au niveau de gris qui lui est immédiatement inférieur est indiqué dans le tableau 3 qui suit.

**Tableau 3**

| Segment1 | Segment2 | Segment3 | Segment4 | Segment5 | Segment6 |
|---|---|---|---|---|---|
| 0.00 | 0.00 | 0.00 | 0.00 | 0.00 | 0.00 |
| 12.00 | **4.99** | **8.32** | **11.65** | 14.97 | 18.30 |
| 21.63 | 24.96 | 28.28 | 31.61 | 34.94 | 38.27 |
| 41.59 | 44.92 | 48.25 | 51.58 | 54.91 | 58.23 |
| 61.56 | 64.89 | 68.22 | 71.54 | 74.87 | 78.20 |
| 81.53 | 84.85 | 88.18 | 91.51 | 94.84 | 98.16 |
| 101.49 | 104.82 | 08.15 | 111.47 | 114.80 | 118.13 |
| 121.46 | 124.78 | 128.11 | 131.44 | 134.77 | 138.10 |
| 141.42 | 144.75 | 148.08 | 151.41 | 154.73 | 158.06 |
| 161.39 | 164.72 | 168.04 | 171.37 | 174.70 | 178.03 |
| 181.35 | **184.68** | 188.01 | 191.34 | 194.66 | 197.99 |

En reprenant l'exemple précédent, le tableau 3 indique que le niveau de gris NG28 est obtenu en augmentant le temps d'éclairement du quatrième segment de 91,51 µs par rapport au niveau de gris NG27.

Il est à noter toutefois que le temps d'éclairement additionnel pour les niveaux de gris NG2, NG3 et NG4 est inférieur à 12 µs (temps de commutation minimal d'un micro-miroir dans la technologie DLP actuelle). Ces niveaux de gris (en gras dans les tableaux 2 et 3) ne peuvent donc pas être codés selon un code incrémental dans la mesure où il n'est pas possible d'obtenir un temps d'éclairement inférieur à 12µs durant un segment temporel.

Par conséquent, les niveaux de gris NG2, NG3 et NG4 sont codés selon un code classique. Leur temps d'éclairement (supérieur à 12 µs) est donc exécuté sur un segment unique comme pour le niveau de gris NG1. Les temps d'éclairement des niveaux NG1, NG2, NG3 et NG4 indiqués en caractères gras dans le tableau 4 qui suit sont donc des temps d'éclairement additionnels définis par rapport au niveau de gris NG0.

**Tableau 4**

| Segment1 | Segment2 | Segment3 | Segment4 | Segment5 | Segment6 |
|---|---|---|---|---|---|
| 0.00 | 0.00 | 0.00 | 0.00 | 0.00 | 0.00 |
| **12.00** | **16.99** | **25.31** | **36.96** | 14.97 | 18.30 |
| 21.63 | 24.96 | 28.28 | 31.61 | 34.94 | 38.27 |
| 41.59 | 44.92 | 48.25 | 51.58 | 54.91 | 58.23 |
| 61.56 | 64.89 | 68.22 | 71.54 | 74.87 | 78.20 |
| 81.53 | 84.85 | 88.18 | 91.51 | 94.84 | 98.16 |
| 101.49 | 104.82 | 08.15 | 111.47 | 114.80 | 118.13 |
| 121.46 | 124.78 | 128.11 | 131.44 | 134.77 | 138.10 |
| 141.42 | 144.75 | 148.08 | 151.41 | 154.73 | 158.06 |

(suite)

| Segment1 | Segment2 | Segment3 | Segment4 | Segment5 | Segment6 |
|---|---|---|---|---|---|
| 161.39 | 164.72 | 168.04 | 171.37 | 174.70 | 178.03 |
| 181.35 | 184.68 | 188.01 | 191.34 | 194.66 | 197.99 |

Selon l'invention, les niveaux de gris sont donc codés comme montré dans le tableau 5. Le tableau 5 donne les temps d'éclairement et leur répartition sur les 6 segments temporels pour les 15 premiers niveaux de gris et les 2 derniers.

**Tableau 5**

| | Seg1 | + | Seg | + | Seg3 | + | Seg4 | + | Seg5 | + | Seg6 |
|---|---|---|---|---|---|---|---|---|---|---|---|
| **NG0=0=** | 0 | + | 0 | + | 0 | + | 0 | + | 0 | + | 0 |
| **NG1=12=** | 12 | + | 0 | + | 0 | + | 0 | + | 0 | + | 0 |
| **NG2=16.99=** | 0 | + | **16.99** | + | 0 | + | 0 | + | 0 | + | 0 |
| **NG3=25.31=** | 0 | + | 0 | + | **25.31** | + | 0 | + | 0 | + | 0 |
| **NG4=36.96=** | 0 | + | 0 | + | 0 | + | **36.96** | + | 0 | + | 0 |
| NG5=51.93= | 0 | + | 0 | + | 0 | + | 36.96 | + | 14.97 | + | 0 |
| NG6=70.23= | 0 | + | 0 | + | 0 | + | 36.96 | + | 14.97 | + | 18.30 |
| NG7=91.86= | 21.63 | + | 0 | + | 0 | + | 36.96 | + | 14.97 | + | 18.30 |
| NG8=116.82= | 21.63 | + | 24.96 | + | 0 | + | 36.96 | + | 14.97 | + | 18.30 |
| NG9=145.1= | 21.63 | + | 24.96 | + | 28.28 | + | 68.57 | + | 14.97 | + | 18.30 |
| NG10=176.72= | 21.63 | + | 24.96 | + | 28.28 | + | 68.57 | + | 49.91 | + | 18.30 |
| NG11=211.66= | 21.63 | + | 24.96 | + | 28.28 | + | 68.57 | + | 49.91 | + | 56.57 |
| NG12=249.92= | 63.22 | + | 24.96 | + | 28.28 | + | 68.57 | + | 49.91 | + | 56.57 |
| NG13=291.52= | 63.22 | + | 69.88 | + | 28.28 | + | 68.57 | + | 49.91 | + | 56.57 |
| NG14=336.44= | 63.22 | + | 69.88 | + | 76.53 | + | 68.57 | + | 49.91 | + | 56.57 |
| ... | | | | | | ... | | | | | |
| ... | | | | | | ... | | | | | |
| NG59=5802.01= | 913.42 | + | 943.37 | + | 973.32 | + | 1040.23 | + | 1048.19 | + | 883.48 |
| NG60=6000= | 913.42 | + | 943.37 | + | 973.32 | + | 1040.23 | + | 1048.19 | + | 1081.47 |

En se référant au tableau 4, on peut déterminer la durée des 10 sous-balayages (10 adressages par segment temporel) des 6 segments temporels de chaque couleur. Par exemple, le premier segment comporte 10 sous-balayages ayant respectivement pour durée 181,35μs, 161,39s, 141,42μs, 121.46μs, 101,49μs, 81,53μs, 61,56μs, 41,59μs, 21,63μs et 12μs. La répartition des sous-balayages dans le premier segment temporel est montrée à la figure 6.

Les sous-balayages de durée 12μs (segment 1), 16,99μs (segment 2) et 25,31μs (segment 3) ne sont jamais "allumés" en même temps que les autres sous-balayages et servent uniquement à l'affichage des niveaux de gris NG1, NG2 et NG3.

Pour tous les niveaux de gris autres que les niveaux NG1, NG2 et NG3, le micro-miroir concerné repasse dans une position de repos au début de ces trois sous-balayages. Ainsi, pour tous les niveaux de gris, le micro-miroir passe au plus une fois d'une position passive à une position active (ou inversement) au cours de chaque segment temporel de la trame vidéo.

Par ailleurs, pour ne pas accentuer le problème de séparation des couleurs (color break-up en langue anglaise), les temps d'éclairement sont uniformément répartis sur les 6 segments temporels notamment pour les niveaux de gris les plus élevés (cf tableau 5).

Ce procédé permet également d'obtenir une résolution élevée pour les bas niveaux de gris. En effet, le pas entre les niveaux NG1 et NG2 étant de 4.99µs, on obtient une résolution de 10 bits (6000/4.99). En diminuant ce pas, il est possible d'augmenter encore cette résolution (11 bits pour un pas de 3 µs). Dans les codages employés actuellement, cette résolution est au mieux de 9 bits (pas de 12µs imposé par la technologie).

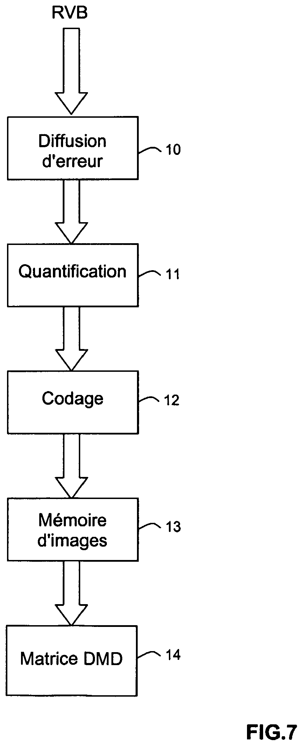

De très nombreuses structures sont possibles pour mettre en oeuvre le procédé de l'invention. Un dispositif mettant en oeuvre le procédé de l'invention est représenté à la figure 7. Un flux de signaux vidéo R,V,B est reçu par un circuit de diffusion d'erreur 10 et un circuit de quantification 11 pour limiter le nombre de niveaux de gris à afficher. Ces deux circuits sont destinés à mettre en oeuvre la technique de "dithering". L'algorithme mis en oeuvre dans le circuit de diffusion d'erreur 10 est par exemple celui de Floyd et Steinberg. A la fin de la quantification, les niveaux de gris sont codés sur 6 bits (61 niveaux de gris possibles). Ensuite, les signaux sont traités par un circuit 12 qui est destiné à mettre en oeuvre plus particulièrement le procédé de l'invention. Le circuit 12 peut être défini comme une table de correspondance ou LUT (de l'anglais Look Up Table) recevant en entrée des niveaux de gris codés sur 6 bits et délivrant en sortie des niveaux de gris codés sur 60 bits (10 bits pour chaque segment), chacun des 60 bits répartis se rapportant à un plan binaire et chaque plan binaire correspondant à l'affichage d'un sous-balayage. Les niveaux de gris codés sur 60 bits en sortie du circuit 12 sont conformes à l'invention en ce sens que, lorsque l'un des 10 bits se rapportant à un segment temporel change de valeur, les bits suivants de ce segment conservent cette valeur. Les niveaux de gris codés sur 60 bits sont ensuite stockés dans une mémoire d'image 13, chaque bit étant stocké dans une zone de mémoire dédié à un plan binaire. Ces plans binaires sont ensuite lus par une matrice DMD 14. Ce schéma n'est donné qu'à titre d'illustration.

L'invention a été décrite dans le cadre de dispositif d'affichage numérique comportant une matrice numérique à micro-miroirs. L'invention n'est pas limitée à ce type de dispositif. L'invention peut être utilisée avec d'autres moyens d'affichage présentant des caractéristiques communes avec les micro-miroirs tel que par exemple des afficheurs numériques de type LCOS.

## Revendications

**1.** Procédé d'affichage d'une image vidéo sur un dispositif d'affichage numérique pendant une trame vidéo, l'affichage de l'image vidéo étant réalisée par l'affichage séquentiel de trois images de couleur rouge, verte et bleue, respectivement, la trame vidéo comportant au moins deux segments temporels non consécutifs pour chaque couleur pour afficher un niveau de gris, ledit dispositif d'affichage numérique comportant une pluralité de cellules, chaque cellule pouvant prendre sélectivement un état allumé ou un état éteint et changer plusieurs fois d'état pendant une trame vidéo, chaque segment temporel comportant une pluralité de sous-périodes consécutives, appelées sous-balayages, de durées différentes pendant chacune desquelles chaque cellule est soit dans un état allumé, soit dans un état éteint, pour une même couleur, lesdits au moins deux segments temporels comprenant des pluralités différentes des sous-balayages,

**caractérisé en ce que** chaque cellule change d'état au plus une fois pendant chaque segment temporel de la trame vidéo pour afficher une pluralité de niveaux de gris, et **en ce que** :

- pour toute paire de niveaux de gris successifs ayant un niveau de gris supérieur à un seuil proche de zéro, ladite paire comprenant un premier niveau de gris et un deuxième niveau de gris immédiatement inférieur au premier niveau de gris, la différence de durée à l'état allumé d'une cellule affichant successivement ledit premier niveau de gris et ledit deuxième niveau de gris étant associée à un unique segment temporel de ladite trame vidéo, la partie commune de la durée à l'état allumée de ladite cellule affichant successivement ledit premier niveau de gris et ledit deuxième niveau de gris étant associée aux mêmes sous-balayages pour le premier niveau de gris et le deuxième niveau de gris;
- pour chaque niveau de gris inférieur audit seuil, une cellule affichant ledit niveau de gris étant allumée pendant un seul sous-balayage déterminé d'un unique segment temporel, ledit sous-balayage déterminé n'étant jamais allumé en même temps que les autres sous-balayages et servant uniquement à l'affichage dudit niveau de gris, ledit segment temporel étant différent pour chaque niveau de gris inférieur audit seuil.

**2.** Procédé selon la revendication 1, **caractérisé en ce que**, pour chaque couleur, la durée des sous-balayages desdits au moins deux segments temporels est déterminée de façon à ce que la durée de l'état allumé des cellules croisse selon une courbe de correction inverse de gamma.

**3.** Procédé selon l'une des revendications 1 à 2, **caractérisé en ce que** la durée totale des sous-balayages de chaque segment temporel est sensiblement égale à une valeur prédéterminée commune à tous lesdits au moins deux segments temporels.

**4.** Dispositif d'affichage numérique d'une image vidéo pendant une trame vidéo comprenant des moyens pour afficher séquentiellement trois images de couleur rouge, verte et bleue, respectivement, la trame vidéo comportant au moins deux segments temporels non consécutifs pour chaque couleur pour afficher un niveau de gris, ledit dispositif d'affichage numérique comportant une pluralité de cellules, chaque cellule pouvant prendre sélectivement un état allumé ou un état éteint et changer plusieurs fois d'état pendant une trame vidéo, chaque segment temporel comportant une pluralité de sous-périodes consécutives, appelées sous-balayages, de durées différentes pendant chacune desquelles chaque cellule est soit dans un état allumé, soit dans un état éteint, pour une même couleur, lesdits au moins deux segments temporels comprenant des pluralités différentes des sous-balayages, **caractérisé en ce qu'**il comporte des moyens pour changer l'état des cellules au plus une fois pendant chaque segment temporel de la trame vidéo pour afficher une pluralité de niveaux de gris, et **en ce que**:

- pour toute paire de niveaux de gris successifs ayant un niveau de gris supérieur à un seuil proche de zéro, ladite paire comprenant un premier niveau de gris et un deuxième niveau de gris immédiatement inférieur au premier niveau de gris, la différence de durée à l'état allumé d'une cellule affichant successivement ledit premier niveau de gris et ledit deuxième niveau de gris étant associée à un unique segment temporel de ladite trame vidéo, la partie commune de la durée à l'état allumée de ladite cellule affichant successivement ledit premier niveau de gris et ledit deuxième niveau de gris étant associée aux mêmes sous-balayages pour le premier niveau de gris et le deuxième niveau de gris ;
- pour chaque niveau de gris inférieur audit seuil, une cellule affichant ledit niveau de gris étant allumée pendant un seul sous-balayage déterminé d'un unique segment temporel, ledit sous-balayage déterminé n'étant jamais allumé en même temps que les autres sous-balayages et servant uniquement à l'affichage dudit niveau de gris, ledit segment temporel étant différent pour chaque niveau de gris inférieur audit seuil.

**5.** Dispositif selon la revendication 4, **caractérisé en ce qu'**il comprend une matrice numérique de micro-miroirs, chaque cellule dudit dispositif étant associée à un micro-miroir, et **en ce que** les cellules dudit dispositif sont dans un état allumé lorsque les micro-miroirs associés sont dans une position active dans laquelle il contribue à la projection de lumière sur un écran du dispositif et sont dans un état éteint lorsque les micro-miroirs associés sont dans une position passive dans laquelle il empêche ladite projection de lumière sur ledit écran.

**6.** Dispositif selon l'une des revendications 4 à 5, **caractérisé en ce que**, pour chaque couleur, la durée des sous-balayages desdits au moins deux segments temporels est déterminée de façon à ce que la durée de l'état allumé des cellules croisse selon une courbe de correction inverse de gamma.

**7.** Dispositif selon l'une des revendications 4 à 6, **caractérisé en ce que** la durée totale des sous-balayages de chaque segment temporel est sensiblement égale à une valeur prédéterminée commune à tous lesdits au moins deux segments temporels.

**Patentansprüche**

**1.** Verfahren zur Anzeige eines Videobildes auf einem digitalen Anzeigegerät während eines Videoframes, wobei die Anzeige des Videobildes durch die sequentielle Anzeige von drei Bildern von jeweils roter, grüner und blauer Farbe vorgenommen wird, wobei der Videoframe mindestens zwei nicht aufeinanderfolgende zeitliche Segmente für jede Farbe umfasst, um eine Graustufe anzuzeigen, wobei das besagte digitale Anzeigegerät eine Vielzahl von Zellen umfasst, wobei jede Zelle selektiv einen eingeschalteten Zustand oder einen ausgeschalteten Zustand einnehmen und während eines Videoframes mehrere Male den Zustand ändern kann, wobei jedes zeitliche Segment eine Vielzahl von aufeinanderfolgenden, als Subscans bezeichnete Unterperioden von unterschiedlichen Längen umfasst, und jede Zelle während jeder einzelnen von ihnen entweder in einem eingeschalteten oder in einem ausgeschalteten Zustand ist, für ein- und dieselbe Farbe, wobei die besagten mindestens zwei zeitlichen Segmente unterschiedliche Vielzahlen der Subscans umfassen, **dadurch gekennzeichnet, dass** jede Zelle höchstens einmal während jedes zeitlichen Segments des Videoframes den Zustand ändert, um eine Vielzahl von Graustufen anzuzeigen, und dadurch, dass

- für jedes Paar von aufeinanderfolgenden Graustufen mit einer Graustufe oberhalb einer Schwelle nahe Null das besagte Paar eine erste Graustufe und eine zweite Graustufe unmittelbar unterhalb der ersten Graustufe umfasst, wobei der Längenunterschied im eingeschalteten Zustand einer Zelle, die nacheinander die besagte erste Graustufe und die besagte zweite Graustufe anzeigt, mit einem eindeutigen zeitlichen Segment des besagten Videoframes verbunden ist, wobei der gemeinsame Anteil der Länge im eingeschalteten Zustand der besagten Zelle, die nacheinander die erste Graustufe und die zweite Graustufe anzeigt, mit denselben Subscans für die erste Graustufe und die zweite Graustufe verbunden ist;

- für jede Graustufe unterhalb der besagten Schwelle eine Zelle, die die besagte Graustufe anzeigt, während eines einzigen festgelegten Subscans eines eindeutigen zeitlichen Segments eingeschaltet ist, wobei der besagte festgelegte Subscan niemals zur gleichen Zeit eingeschaltet ist wie die anderen Subscans und ausschließlich zur Anzeige der besagten Graustufe dient, wobei das besagte zeitliche Segment für jede Graustufe unterhalb der besagten Schwelle unterschiedlich ist.

2. Verfahren nach Anspruch 1, **dadurch gekennzeichnet, dass** für jede Farbe die Länge der Subscans der besagten mindestens zwei zeitlichen Segmente dergestalt festgelegt wird, dass die Länge des eingeschalteten Zustands der Zellen entsprechend einer invertierten Gammakorrektur-Kurve ansteigt.

3. Verfahren nach einem der Ansprüche 1 bis 2, **dadurch gekennzeichnet, dass** die Gesamtlänge der Subscans jedes zeitlichen Segments im wesentlichen gleich einem vorab festgelegten Wert ist, der für alle der besagten mindestens zwei zeitlichen Segmente gleich ist.

4. Digitales Gerät zur Anzeige eines Videobildes während eines Videoframes, das Mittel umfasst, um sequentiell drei Bilder von jeweils roter, grüner und blauer Farbe anzuzeigen, wobei der Videoframe mindestens zwei nicht aufeinanderfolgende zeitliche Segmente für jede Farbe umfasst, um eine Graustufe anzuzeigen, wobei das besagte digitale Anzeigegerät eine Vielzahl von Zellen umfasst, wobei jede Zelle selektiv einen eingeschalteten Zustand oder einen ausgeschalteten Zustand einnehmen und während eines Videoframes den Zustand mehrere Male ändern kann, wobei jedes zeitliche Segment eine Vielzahl von aufeinanderfolgenden, als Subscans bezeichnete Unterperioden von unterschiedlichen Längen umfasst, und jede Zelle während jeder einzelnen von ihnen entweder im eingeschalteten oder im ausgeschalteten Zustand ist, für ein- und dieselbe Farbe, wobei die besagten mindestens zwei zeitlichen Segmente unterschiedliche Vielzahlen der Subscans umfassen, **dadurch gekennzeichnet, dass** es Mittel umfasst, um den Zustand der Zellen höchstens einmal während jedes zeitlichen Segments des Videoframes zu ändern, um eine Vielzahl von Graustufen anzuzeigen, und dadurch, dass:

   - für jedes Paar von aufeinanderfolgenden Graustufen mit einer Graustufe oberhalb einer Schwelle nahe Null das besagte Paar eine erste Graustufe und eine zweite Graustufe unmittelbar unterhalb der ersten Graustufe umfasst, wobei der Längenunterschied im eingeschalteten Zustand einer Zelle, die nacheinander die besagte erste Graustufe und die besagte zweite Graustufe anzeigt, mit einem eindeutigen zeitlichen Segment des besagten Videoframes verbunden ist, wobei der gemeinsame Anteil der Länge im eingeschalteten Zustand der besagten Zelle, die nacheinander die erste Graustufe und die zweite Graustufe anzeigt, mit denselben Subscans für die erste Graustufe und die zweite Graustufe verbunden ist;

   - für jede Graustufe unterhalb der besagten Schwelle eine Zelle, die die besagte Graustufe anzeigt, während eines einzigen festgelegten Subscans eines eindeutigen zeitlichen Segments eingeschaltet ist, wobei der besagte festgelegte Subscan niemals zur gleichen Zeit eingeschaltet ist wie die anderen Subscans und ausschließlich zur Anzeige der besagten Graustufe dient, wobei das besagte zeitliche Segment für jede Graustufe unterhalb der besagten Schwelle unterschiedlich ist.

5. Gerät nach Anspruch 4, **dadurch gekennzeichnet, dass** es eine digitale Matrix aus Mikrospiegeln umfasst, wobei jede Zelle des besagten Geräts mit einem Mikrospiegel verbunden ist, und dadurch, dass die Zellen des besagten Geräts in einem eingeschalteten Zustand sind, wenn die verbundenen Mikrospiegel sich in einer aktiven Position befinden, in welcher es zur Lichtprojektion auf einen Bildschirm des Geräts beiträgt, und in einem ausgeschalteten Zustand sind, wenn die verbundenen Mikrospiegel sich in einer passiven Position befinden, in welcher es die besagte Lichtprojektion auf den besagten Bildschirm verhindert.

6. Gerät nach einem der Ansprüche 4 bis 5, **dadurch gekennzeichnet, dass** für jede Farbe die Länge der Subscans der besagten mindestens zwei zeitlichen Segmente dergestalt festgelegt wird, dass die Länge des eingeschalteten Zustands der Zellen entsprechend einer invertierten Gammakorrektur-Kurve ansteigt.

7. Gerät nach einem der Ansprüche 4 bis 6, **dadurch gekennzeichnet, dass** die Gesamtlänge der Subscans von jedem zeitlichen Segment im wesentlichen gleich einem vorab festgelegten Wert ist, der für alle der besagten mindestens zwei zeitlichen Segmente gleich ist.

**Claims**

1. Method for displaying a video image on a digital display device during a video frame, the display of the video image being conducted by the sequential display of three red, green and blue images, respectively, the video frame comprising at least two non-consecutive temporal segments for each colour to display a level of grey, said digital display device comprising a plurality of cells, each cell being able to have selectively an on status or off status and change status several times during a video frame, each temporal segment comprising a plurality of consecutive sub-periods, called sub-scans, of different durations during each of which each cell is either in an on status, or in an off status, for a same colour, said at least two temporal segments comprising different pluralities of sub-scans, **characterised in that** each status changes once at most during each temporal segment of the video frame to display a plurality of levels of grey, and **in that**:

   - for any pair of successive levels of grey having a level of grey greater than a threshold close to zero, said pair comprising a first level of grey and a second level of grey immediately lower than the first level of grey, the difference of period in the on status of a cell successively displaying said first level of grey and said second level of grey being associated with a unique temporal segment of said video frame, the common part of the on status duration of said cell successively displaying said first level of grey and said second level of grey being associated with the same sub-scans for the first level of grey and the second level of grey,
   - for each level of grey lower than said threshold, a cell displaying said level of grey being on during a single determined sub-scan of a unique temporal segment, said determined sub-scan never being on at the same time as the other sub-scan and serving only to display said level of grey, said temporal segment being different for each level of grey lower than said threshold.

2. Method according to claim 1, **characterised in that**, for each colour, the duration of the sub-scans of said at least two temporal segments is determined such that the duration of the on status of the cells increases according to a gamma inverse correction curve.

3. Method according to one of claims 1 to 2, **characterised in that** the total duration of the sub-scans of each temporal segment is noticeably equal to a predetermined value common to all of said at least two temporal segments.

4. Digital display device of a video image during a video frame comprising means for sequentially displaying three red, green and blue images, respectively, the video frame comprising at least two non-consecutive temporal segments for each colour to display a level of grey, said digital display device comprising a plurality of cells, each cell being able to have selectively an on status or off status and change status several times during a video frame, each temporal segment comprising a plurality of consecutive sub-periods, called sub-scans, of different durations during each of which each cell is either in an on status, or in an off status, for a same colour, said at least two temporal segments comprising different pluralities of sub-scans, **characterised in that** it comprises means for changing the status of the cells at most once during each temporal segment of the video frame to display a plurality of levels of grey, and **in that**:

   - for any pair of successive levels of grey having a level of grey greater than a threshold close to zero, said pair comprising a first level of grey and a second level of grey immediately lower than the first level of grey, the difference of period in the on status of a cell successively displaying said first level of grey and the second level of grey being associated with a unique temporal segment of said video frame, the common part of the on status duration of said cell successively displaying said first level of grey and said second level of grey being associated with the same sub-scans for the first level of grey and the second level of grey,
   - for each level of grey lower than said threshold, a cell displaying said level of grey being on during a single determined sub-scan of a unique temporal segment, said determined sub-scan never being on at the same time as the other sub-scan and serving only to display of said level of grey, said temporal segment being different for each level of grey lower than said threshold.

5. Device according to claim 4, **characterised in that** it comprises a micro-mirror digital matrix, each cell of said device being associated with a micro-mirror, and **in that** the cells of said device are in an on status when the associated micro-mirrors are in an active position in which it contributes to the projection of light on a screen of the device and are in an off status when the associated micro-mirrors are in a passive position in which it prevents said light projection on said screen.

6. Device according to one of claims 4 to 5, **characterised in that**, for each colour, the duration of the sub-scans of said at least two temporal segments is determined such that the duration of the on status of the cells increases according to a gamma inverse correction curve.

7. Device according to one of claims 4 to 6, **characterised in that** the total duration of the sub-scans of each temporal segment is noticeably equal to a predetermined value common to all of said at least two temporal segments.

## 1 trame

| 2 | 4 | 8 | 16 | 32 | 64 | | 128 | |
|---|---|---|---|---|---|---|---|---|

1

## FIG.1

Revolution
fréquence = 150Hz

R V B R V B R V B R V B R V B R V B

1 trame

six segments verts dans la trame

## FIG.4

FIG.2

FIG.3

**FIG.5**

**FIG.6**

RVB

Diffusion d'erreur — 10

Quantification — 11

Codage — 12

Mémoire d'images — 13

Matrice DMD — 14

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1052614 A
- US 5619228 A
- EP 0875881 A
- US 6275271 B1
- US 2001015628 A1
- WO 0245062 A2
- US 2002008706 A1